# EUROPEAN PATENT APPLICATION

(11) **EP 2 741 065 A1**
(43) Date of publication of application: **11.06.2014**
(21) Application number: 11870313.1
(22) Date of filing: 03.08.2011
(51) Int. Cl.: G01L 5/00, B25J 15/08

(54) **POSITIONAL DISPLACEMENT DETECTOR, ROBOT HAND, AND ROBOT SYSTEM**

(71) Applicant: Kabushiki Kaisha Yaskawa Denki, Kitakyushu-shi, Fukuoka 806-0004 (JP)
(72) Inventor: NAGAI Ryoichi, Kitakyushu-shi Fukuoka 806-0004 (JP); NAGATA Hideo, Kitakyushu-shi Fukuoka 806-0004 (JP)
(74) Representative: Viering, Jentschura & Partner Patent- und Rechtsanwälte
(86) International application number: PCT/JP2011/067791
(87) International publication number: WO 2013/018213

(57) **Abstract**

Provided is a positional displacement detector 20, a robot hand 10, and a robot system 64 that are capable of detecting an object's positional displacement equal to or beyond a set range.

The positional displacement detector 20 includes a contact member 22, a prohibition member 24, and a vibration detector 26. The contact member 22 is configured to make contact with the object and deform with a positional displacement of the object. The prohibition member 24 is configured to make contact with the deformed contact member 22 to prohibit a deformation of a magnitude equal to or more than a predetermined magnitude from being caused to the contact member 22. The vibration detector 26 is configured to detect a vibration generated when the contact member 22 has made contact with the prohibition member 24.

## Description

### Technical Field

The present invention relates to a positional displacement detector, a robot hand, and a robot system.

### Background Art

A slip sensor is described in Patent Literature 1. The slip sensor is configured to allow a tuning fork, which is assembled in a finger that is for gripping an object, to vibrate when a slip occurs between the tuning fork and the object to be gripped. The slip sensor is configured to be able to sense the vibration to inform the occurrence of the slip.

### Citation List

### Patent Literature

Patent Literature 1: JP 61-56891 A

### Summary of Invention

### Technical Problem

An object of the present invention is to provide a positional displacement detector, a robot hand, and a robot system that are capable of detecting an object's positional displacement equal to or beyond a set range.

### Solution to Problem

As a solution to the foregoing problem, according to an aspect of the present invention, there is provided a positional displacement detector including:
a contact member configured to make contact with an object and deform with a positional displacement of the object;
a prohibition member configured to make contact with the deformed contact member to prohibit a deformation of a magnitude equal to or more than a predetermined magnitude from being caused to the contact member; and
a vibration detector configured to detect a vibration generated when the contact member has made contact with the prohibition member.

According to another aspect, there is provided a robot hand including:
gripping claws configured to grip an object;
a contact member configured to make contact with the object gripped by the gripping claws and deform with a positional displacement of the object;
a prohibition member configured to make contact with the deformed contact member to prohibit a deformation of a magnitude equal to or more than a predetermined magnitude from being caused to the contact member; and
a vibration detector configured to detect a vibration generated when the contact member has made contact with the prohibition member.

According to still another aspect, there is provided a robot system including a robot hand and a processor, the robot hand including: gripping claws configured to grip an object; a contact member configured to make contact with the object gripped by the gripping claws and deform with a positional displacement of the object; a prohibition member configured to make contact with the deformed contact member to prohibit a deformation of a magnitude equal to or more than a predetermined magnitude from being caused to the contact member; and a vibration detector configured to detect a vibration generated when the contact member has made contact with the prohibition member,
the processor being configured to determine that the gripping of the object by the gripping claws has failed when a signal based on the vibration detected by the vibration detector does not become equal to or more than a predetermined magnitude before a predetermined time elapses after a command to close the gripping claws is output.

### Advantageous Effects of Invention

This invention allows detection of an object's positional displacement equal to or beyond a set range.

### Brief Description of Drawings

Fig 1 is a block diagram of a robot hand according to a first embodiment of the invention.
Fig. 2A is a plan view of a positional displacement detector included in the robot hand.
Fig. 2B is a front view of the positional displacement detector included in the robot hand.
Fig. 2C is a side view of the positional displacement detector included in the robot hand.
Fig. 3 is a diagram for describing an operation of the robot hand.
Fig. 4A is a flowchart of an operation of a robot system including the robot hand.
Fig. 4B is a flowchart of an operation of the robot system before gripping of an object by the robot hand.
Fig. 4C is a flowchart of an operation of the robot system after the gripping of the object by the robot hand.
Fig. 5 is a waveform chart of a signal output by a vibration detector when the robot hand verifies the gripping of the object.
Fig. 6 is a waveform chart of a signal output by the vibration detector when a positional displacement of the object gripped by the robot hand has occurred.
Fig. 7 is a perspective view of a positional displacement detector of a robot hand according to a second embodiment of the invention.

### Description of Embodiments

Embodiments of this invention will now be described with reference to the drawings to facilitate understanding of the invention. Components unrelated to the description may not be illustrated in the drawings.

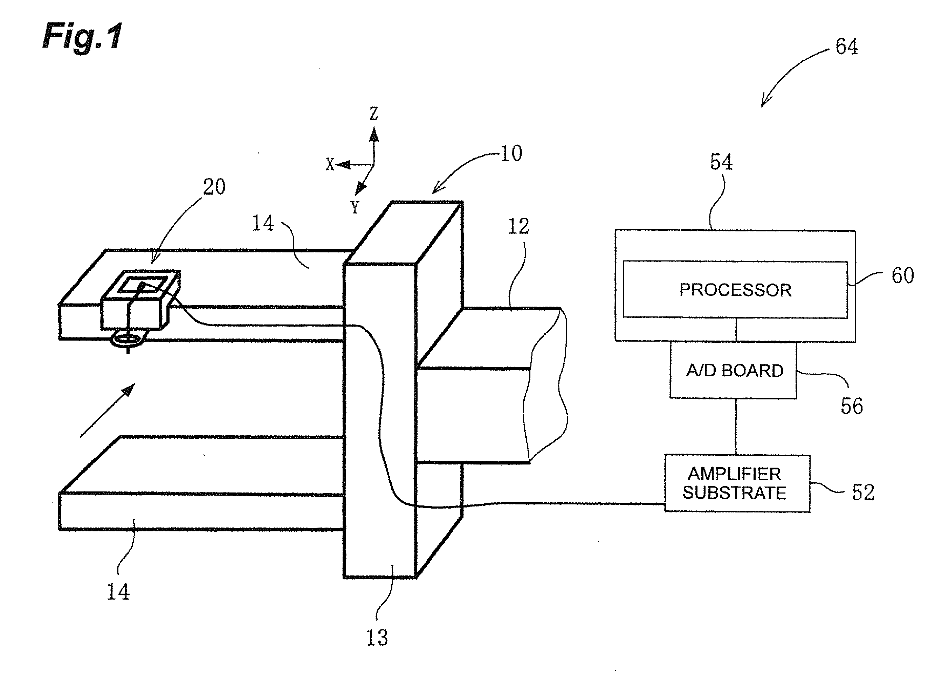

An XYZ coordinate system is defined in Fig. 1 for convenience of the description. The XYZ coordinate system is composed of an X axis extending in one direction, a Y axis extending in a direction intersecting the X axis, and a Z axis extending in a direction intersecting the X axis and the Y axis. This XYZ coordinate system may be a rectangular coordinate system.

### [First embodiment]

A robot hand 10 according to a first embodiment of the invention is provided, for example, at an end portion of a robot arm 12 as illustrated in Fig. 1.

The robot hand 10 includes a base 13 and a pair of gripping claws 14 extending from the base 13 in an X axis direction. An object to be gripped by the robot hand 10 is gripped by the pair of gripping claws 14, which open and close in a Z axis direction.

The robot hand 10 also includes a positional displacement detector 20 provided on a side face of one of the gripping claws 14.

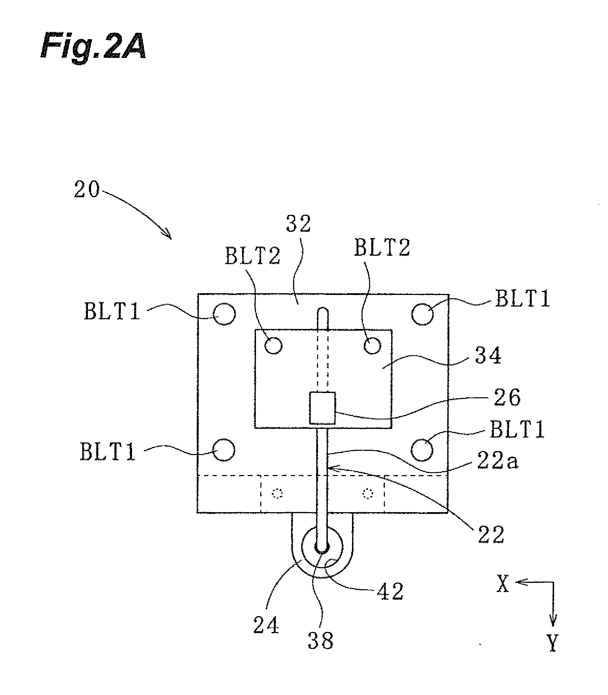

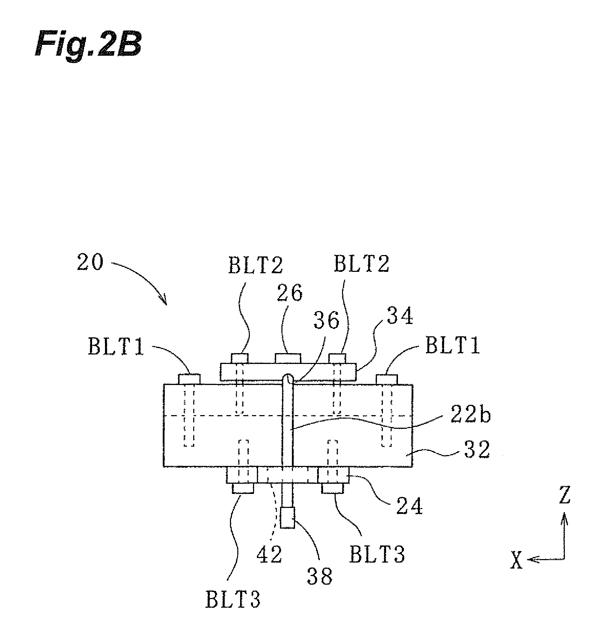

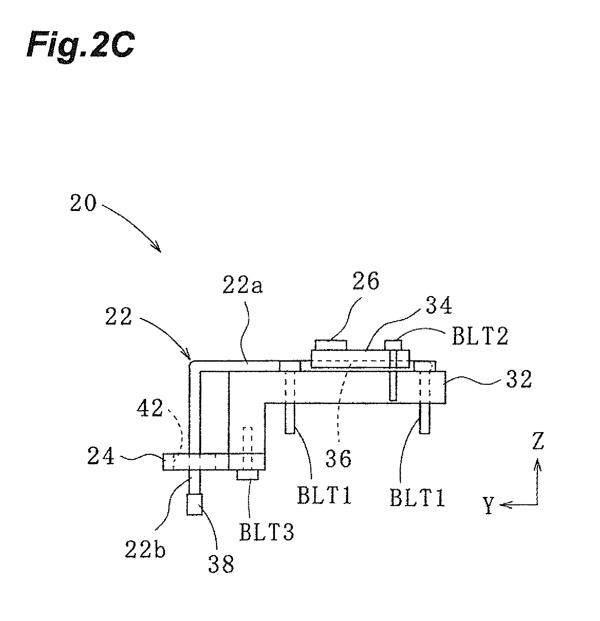

The positional displacement detector 20 includes a contact member 22, a prohibition member 24, and a vibration detector 26 as illustrated in Figs. 2A to 2C.

The contact member 22 is capable of making contact with the object gripped by the gripping claws 14. The contact member 22 has a shape of a rod-like component bent at a midpoint and has elasticity. The contact member may be configured with, for example, metal or resin.

To describe in detail, the contact member 22 includes a fixation portion 22a extending in a Y-axis positive direction (a first direction) and a contact portion 22b extending from an end portion of the fixation portion 22a in a Z-axis negative direction (a second direction).

The fixation portion 22a of the contact member 22 is fixed to the side face of the gripping claw 14 with bolts BLT1. A support member (an example of a member to be fixed) 32, which is an angle member, is disposed between the fixation portion 22a and the side face of the gripping claw 14. The fixation portion 22a is interposed between the support member 32 and a plate-like fixation member 34. The fixation member 34 is fastened to the support member 32 with bolts BLT2 to fix the fixation portion 22a. The fixation member 34 has a groove 36 on its surface facing the fixation portion 22a to allow the fixation portion 22a to fit in the groove 36. The groove 36 extends in a Y axis direction. Thus, with the bolts BLT2 fixing the fixation member 34 loosened, the contact member 22 can be shifted along the groove 36 in the Y axis direction.

An end portion of the contact portion 22b of the contact member 22 is capable of making contact with the object gripped by the gripping claws 14. A friction member 38 having a higher coefficient of friction than the object is provided at the end portion of the contact portion 22b. This friction member 38 may be, for example, rubber in the case of an object being a metallic workpiece.

The prohibition member 24 is capable of making contact with the contact member 22 and thereby prohibiting a deformation of a magnitude equal to or more than a predetermined magnitude from being caused to the contact member 22. The prohibition member 24 is fixed to the support member 32 with bolts BLT3. The prohibition member 24 has a hole 42 with a central axis along the Z axis direction. The contact portion 22b of the contact member 22 passes through the hole 42 at a central portion of the hole 42.

The hole 42 has a diameter of a size corresponding to a tolerable positional displacement quantity to be set for an object. For example, to tolerate a positional displacement of 3 mm, the radius of the hole 42 is set to 3 mm.

The tolerable positional displacement quantity can be changed by making a plurality of prohibition members with the holes 42 having different diameters available for replacement. Provision of a mechanism for adjusting the diameter of the hole 42 is also viable in place of the making available of the plurality of prohibition members with the holes 42 having different diameters.

Note that the hole 42 formed in the prohibition member 24 may be a notch as long as the notch can prohibit a deformation of the contact member 22.

The vibration detector 26 is capable of detecting a vibration of the contact member 22 and the prohibition member 24. The vibration detector 26 has, for example, electric resistance varying with vibration detected.

The vibration detector 26 is provided, for example, on a surface opposite to the fixed surface of the fixation member 34. For the ease of detection of a vibration, the vibration detector 26 is desirably provided on this surface, especially over the fixation portion 22a of the contact member 22 and toward the Y-axis positive direction. In other words, the vibration detector 26 is provided desirably on the fixation member 34 near the contact portion 22b.

The contact member 22 may be partially enlarged to have a widened portion, so that the vibration detector 26 is provided on the widened portion instead of the fixation member 34.

The vibration detector 26 may be configured with, for example, a strain gauge (an example of a strain detection sensor), which detects a strain caused by a vibration in the form of a change in electric resistance.

The change in electric resistance of the vibration detector 26 is converted to a change in voltage by an amplifier substrate 52 illustrated in Fig. 1. The change in voltage is subjected to conversion from an analog signal to a digital signal by an A/D board 56, which is an A/D converter, connected to a microcomputer 54. The digital signal is input into a processor 60, which processes data. This processor 60 is achieved by software executed by the microcomputer 54.

The processor may be construed as part of the positional displacement detector.

A robot system 64 is configured with at least the robot hand 10 and the processor 60.

An operation of the robot hand 10 and positional displacement detection processing (an operation of the robot system 64) associated with the operation of the robot hand 10 will now be described.

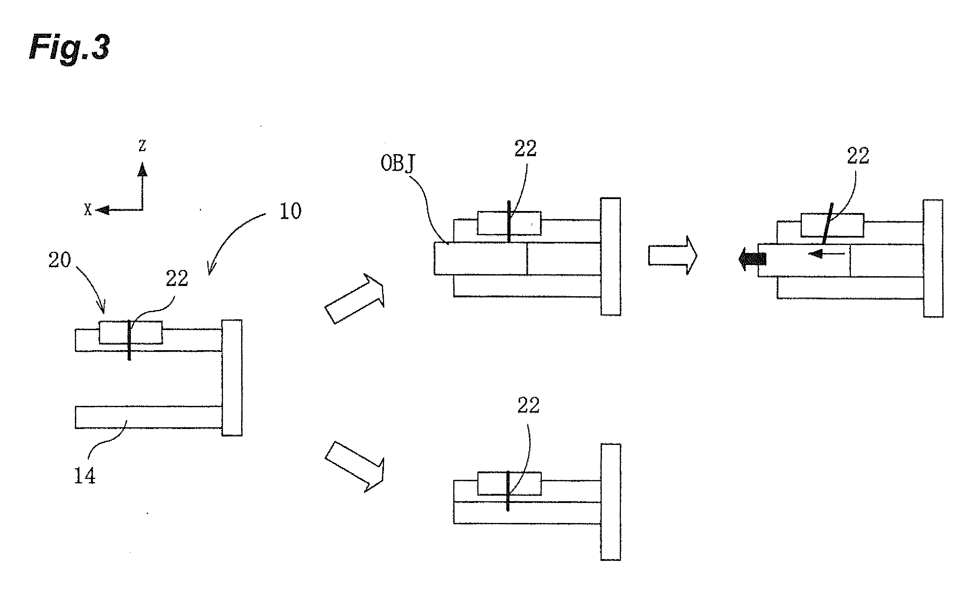

When a control device, not shown, that controls the robot hand 10 outputs a command (a closing command) to close the gripping claws 14, the robot hand 10 enables the pair of gripping claws 14 to grip an object OBJ as illustrated at an upper level in Fig. 3. If a slip occurring during the gripping causes, to the object OBJ, a positional displacement equal to or more than a tolerable positional displacement quantity that is tolerated, the contact member 22 moves (deforms) to make contact with the prohibition member 24, allowing the positional displacement to be detected and prompting the processor 60 (see Fig. 1) to output a positional displacement detection signal.

If, after the outputting of the closing command, the robot hand 10 fails to grip the object OBJ as illustrated at a lower level in Fig. 3, the failure in the gripping of the object OBJ is detected, prompting the processor 60 to output a grip error signal.

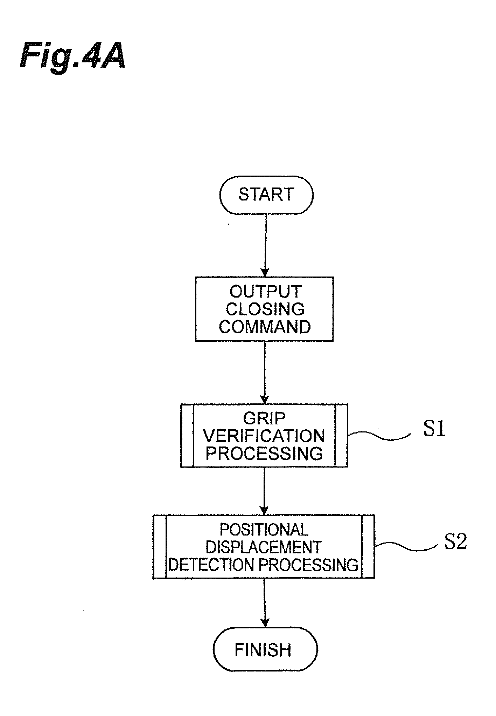

As illustrated in Fig. 4A, after the outputting of the closing command to close the gripping claws 14, the processor 60 executes grip verification processing S1 to verify whether the object has been griped. Subsequently, the processor 60 executes positional displacement detection processing S2 to detect the positional displacement after the gripping of the object.

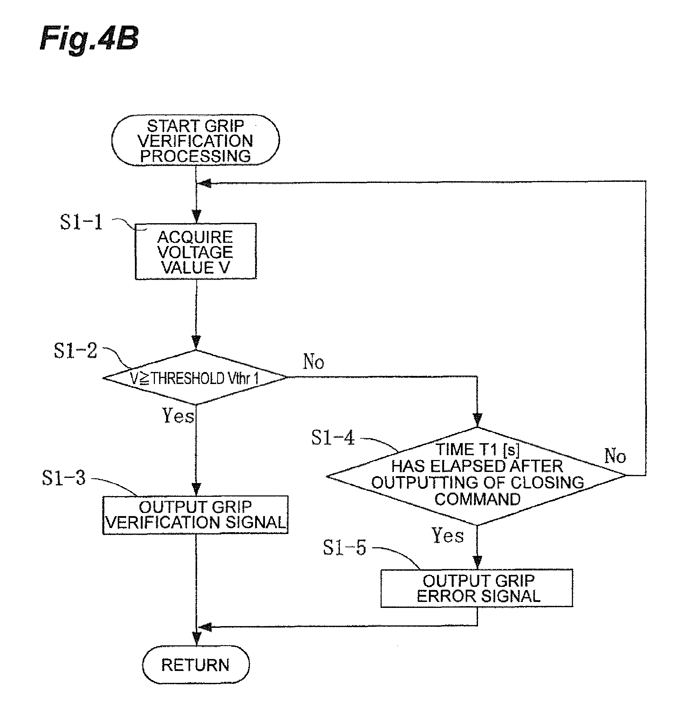

In the grip verification processing S1, the processor 60 executes processing as described below and illustrated in Fig. 4B.

### (Step S1-1)

The processor 60 acquires a voltage value V based on an electric resistance value of the vibration detector 26 via the A/D board 56.

### (Step S1-2)

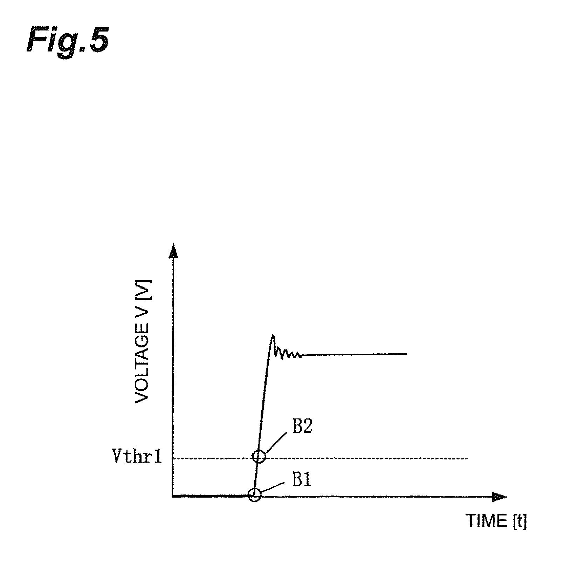

As illustrated in Fig. 5, upon the making contact of the contact member 22 with the object, the contact member 22 deforms to cause a change in electric resistance of the vibration detector 26, increasing the voltage value V (see B1 illustrated in Fig. 5). If the voltage value V becomes equal to or more than a threshold Vthr1 (see B2 illustrated in Fig. 5), it can be determined that the gripping claws 14 have gripped the object. Note that the threshold Vthr1 is set to such a magnitude that a minute deformation caused to the contact member 22 due to inertia of the opening and closing of the gripping claws 14 is not detected.

If the voltage value V is equal to or more than the threshold Vthr1, the processor 60 determines that the contact member 22 has made contact with the object and has deformed. This is followed by the execution of step S1-3.

If the voltage value V is less than the threshold Vthr1, the processor 60 determines that the contact member 22 is not in contact with the object. This is followed by the execution of step S1-4.

### (Step S1-3)

The processor 60 outputs a grip verification signal on the basis of the determination that the object has been gripped. Then, the grip verification processing S1 is finished.

### (Step S1-4)

The flowchart proceeds to return to step S1-1 until a predetermined time T1 (second) elapses after the outputting of the closing command to close the gripping claws 14 of the robot hand 10. In other words, step S1-1 and step S1-2 are repeated until the elapse of the time T1 (second).

The flowchart proceeds to step S1-5 if the time T1 (second) has elapsed after the outputting of the command to close the gripping claws 14 of the robot hand 10.

### (Step S1-5)

The processor 60 outputs a grip error signal indicative of a failure in the gripping of the object. Then, the grip verification processing S1 is finished.

Upon the outputting of the grip error signal, the robot hand 10 is allowed to stop the operation to hold the object and inform an on-site operator of the failure in the gripping of the object.

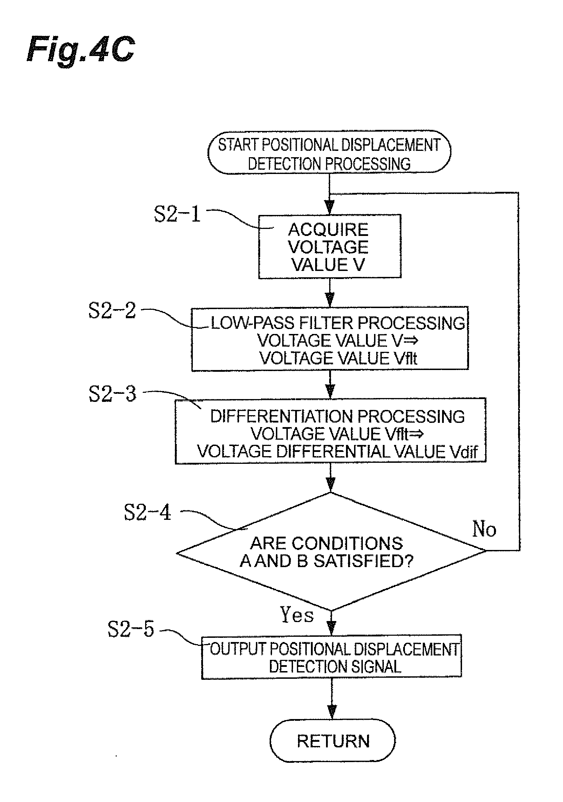

Subsequently, in the positional displacement detection processing S2, the processor 60 executes processing described below and illustrated in Fig. 4C.

### (Step S2-1)

The processor 60 acquires a voltage value V based on an electric resistance value of the vibration detector 26 via the A/D board 56.

### (Step S2-2)

The processor 60 performs low-pass filter processing on the voltage value V to obtain a voltage value Vflt.

### (Step S2-3)

The processor 60 performs differentiation processing on the voltage value Vflt to obtain a voltage differential value Vdif.

### (Step S2-4)

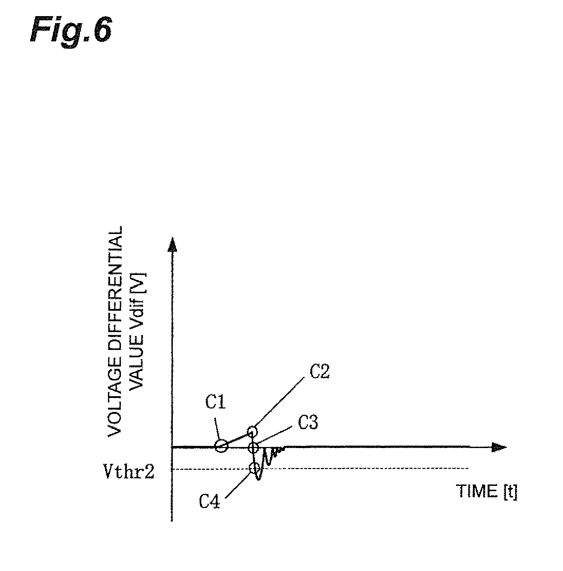

As illustrated in Fig. 6, upon the start of the positional displacement of the object, the contact member 22 in contact with the object deforms to vibrate with the positional displacement of the object. The vibration generated manifests itself in the form of a change in electric resistance of the vibration detector 26, and the voltage differential value Vdif increases with the change in electric resistance (see C1 illustrated in Fig. 6). If the positional displacement of the object exceeds the tolerable positional displacement quantity, the contact portion 22b of the contact member 22 makes contact with the prohibition member 24, producing an impact. This reverses the increase/decrease of the voltage differential value Vdif (see C2 illustrated in Fig. 6). Within T2 (second) after the sign of the voltage differential value Vdif is reversed (see C3 illustrated in Fig. 6), the absolute value of the voltage differential value Vdif becomes equal to or more than a threshold Vthr2 (see C4 illustrated in Fig. 6), allowing determination of the positional displacement of the object.

Here, the processor 60 determines that the contact member 22 has made contact with the prohibition member 24 and that the positional displacement of the object equal to or more than the tolerable positional displacement quantity has occurred if two conditions A and B described below are satisfied.

### (Condition A)

The absolute value |Vdif| of the voltage differential value Vdif is equal to or more than the threshold Vthr2 that has been preset.

### (Condition B)

The reversal of the sign of the voltage differential value Vdif has been detected in T2 (second) (a predetermined duration) before the condition A is satisfied.

This is followed by the execution of step S2-5.

If at least one of the two conditions A and B is not satisfied, the processor 60 determines that the quantity of the positional displacement of the object is within the tolerable positional displacement quantity, and the flowchart reverts to step S2-1.

### (Step S2-5)

The processor 60 outputs the positional displacement detection signal.

Upon the outputting of the positional displacement detection signal, the robot hand 10 puts the object being gripped to another location temporarily and starts the gripping operation on a succeeding object to be gripped. Here, an action against another positional displacement can be taken by increasing a gripping force.

According to this embodiment, an object's positional displacement equal to or more than a tolerable positional displacement quantity can be detected as described above.

Note that it is feasible to retrofit the positional displacement detector 20 on an existing gripping claw including no positional displacement detector 20.

### [Second embodiment]

A robot hand according to a second embodiment of the invention will now be described. Identical reference figures are used to indicate components identical to those of the robot hand 10 according to the first embodiment, and a description thereof in detail is omitted.

The robot hand according to the second embodiment includes a positional displacement detector 120.

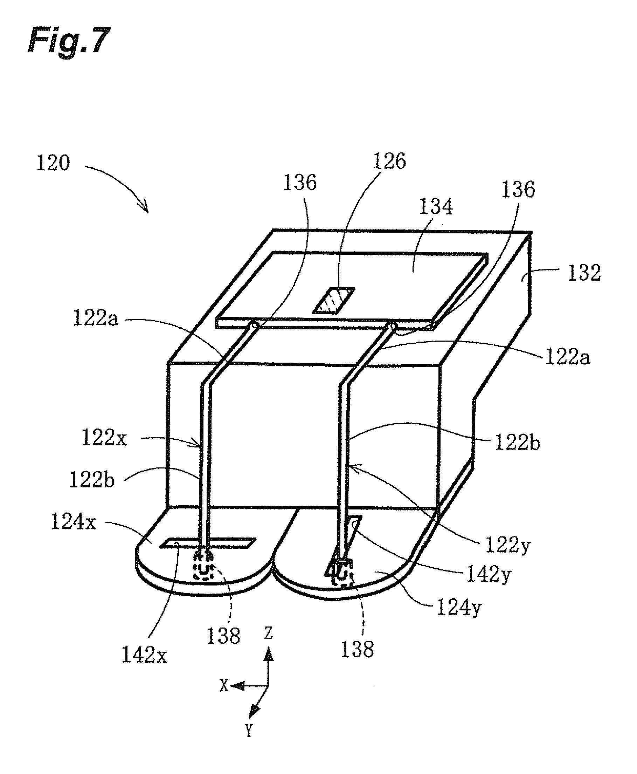

As illustrated in Fig. 7, the positional displacement detector 120 includes an X-axis contact member 122x and a Y-axis contact member 122y, an X-axis prohibition member 124x and a Y-axis prohibition member 124y, and a vibration detector 126.

The contact members 122x and 122y are capable of making contact with an object gripped by gripping claws 14. The contact members 122x and 122y are spaced from each other in the X axis direction. The contact members 122x and 122y each have a shape of a rod-like component bent at a midpoint and have elasticity. To describe in detail, the contact members 122x and 122y each have a fixation portion 122a extending in the Y-axis positive direction (the first direction) and a contact portion 122b extending from an end portion of the fixation portion 122a in the Z-axis negative direction (the second direction).

The fixation portion 122a of each of the contact members 122x and 122y is fixed to a side surface of a gripping claw 14 with a bolt. A support member (an example of a member to be fixed) 132, which is an angle member, is disposed between the fixation portions 122a and the side surface of the gripping claw 14. The fixation portions 122a are interposed between the support member 132 and a plate-like fixation member 134. The fixation member 134 is fastened to the support member 132 with a bolt (not shown) to fix the fixation portions 122a. The fixation member 134 has grooves 136 on its surface facing the fixation portions 122a to allow the fixation portions 122a to fit in the grooves 136. Thus, with the bolt loosened, the contact members 122x and 122y can be shifted along the grooves 136 in the Y axis direction.

End portions of the contact portions 122b of the contact members 122x and 122y are capable of making contact with the object gripped by the gripping claws 14. Friction members 138 having higher coefficients of friction than the object are provided at the end portions of the contact portions 122b.

The X-axis prohibition member 124x and the Y-axis prohibition member 124y, which are spaced from each other in the X axis direction, are individually fixed to the support member 132.

The X-axis prohibition member 124x has a rectangular hole 142x with a longer length in the X axis direction. The contact portion 122b of the X-axis contact member 122x passes through the hole 142x at a central portion of the hole 142x.

The Y-axis prohibition member 124y has a rectangular hole 142y with a longer length in the Y axis direction. The contact portion 122b of the Y-axis contact member 122y passes through the hole 142y at a central portion of the hole 142y.

The lengths of the holes 142x and 142y in longitudinal directions are twice as long as positional displacement quantities to be set for the object. For example, to set positional displacements of 3 mm in the X axis and Y axis directions, the lengths of the holes 142x and 142y are each set to 6 mm.

The tolerable positional displacement quantities can be changed by making a plurality of prohibition members with the holes 142x and 142y having different lengths available for replacement.

The widths of the holes 142x and 142y are set to be slightly larger than the thicknesses of the contact members 122x and 122y extending through the holes 142x and 142y (for example, to be 1 to 10% larger than the thicknesses of the contact members 122x and 122y).

The vibration detector 126 is capable of detecting vibrations of the X-axis contact member 122x and the X-axis prohibition member 124x and vibrations of the Y-axis contact member 122y and the Y-axis prohibition member 124y.

The positional displacement detector 120 according to this embodiment includes the X-axis contact member 122x and the X-axis prohibition member 124x, and the Y-axis contact member 122y and the Y-axis prohibition member 124y, allowing the positional displacements of the object in the X axis direction and in the Y axis direction to be detected.

Note that the support member 132 may include an X-axis vibration detector to detect a vibration in the X axis direction and a Y-axis vibration detector to detect a vibration in the Y axis direction.

The invention is in no way limited to the embodiments described above and can be modified without changing the spirit of the invention. For example, a combination of the embodiments described above and modifications thereof in whole or in part is included in the technical scope of the invention.

For example, it is feasible to provide a processor in a robot control device that controls a robot hand to detect a positional displacement in the embodiments described above. In this case, an A/D board can be connected to a PCI bus or the like of the robot control device.

A vibration detector may output, for example, a voltage on the basis of a vibration detected. In the case of the vibration detector outputting a voltage, an amplifier substrate amplifies the voltage for outputting. The vibration detector may be any detector that detects some type of change in response to a vibration.

Additionally, a vibration detector may be configured with another type of strain detection sensor, such as a piezoelectric element. A sensor capable of detecting a vibration of a contact member or the magnitude of an impact may be used as a vibration detector.

Although the vibration detector detects the making contact between the contact member and the prohibition member in the embodiments described above, any means capable of detecting the making contact between the contact member and the prohibition member may be used. For example, a contact may be configured with a contact member having electrical conductivity and a prohibition member having electrical conductivity. The making contact between the contact member and the prohibition member (the occurrence of a positional displacement of an object) may be detected when this contact is closed.

A contact portion of a contact member may be arranged to pass through a hole formed in a gripping claw at its central portion in the Y axis direction when observed in a plan view in the Z axis direction, so that the contact portion makes contact with an object at the central portion of the gripping claw in the Y axis direction.

### Reference Signs List

10: robot hand, 12: robot arm, 13: base, 14: gripping claw, 20: positional displacement detector, 22: contact member, 22a: fixation portion, 22b: contact portion, 24: prohibition member, 26: vibration detector, 32: support member, 34: fixation member, 36: groove, 38: friction member, 42: hole, 52: amplifier substrate, 54: microcomputer, 56: A/D board, 60: processor, 64: robot system, 120: positional displacement detector, 122a: fixation portion, 122b: contact portion, 122x: X-axis contact member, 122y: Y-axis contact member, 124x: X-axis prohibition member, 124y: Y-axis prohibition member, 126: vibration detector, 132: support member, 134: fixation member, 136: groove, 138: motion member, 142x: hole, 142y: hole, OBJ: object, BLT1, BLT2, BLT3 : bolt

## Claims

1. A positional displacement detector, comprising:
a contact member configured to make contact with an object and deform with a positional displacement of the object;
a prohibition member configured to make contact with the deformed contact member to prohibit a deformation of a magnitude equal to or more than a predetermined magnitude from being caused to the contact member; and
a vibration detector configured to detect a vibration generated when the contact member has made contact with the prohibition member.

2. The positional displacement detector according to claim 1, wherein the prohibition member has a hole or a notch through which the contact member passes.

3. The positional displacement detector according to claim 2, wherein the contact member includes at its end portion a friction member configured to make contact with the object and having a higher coefficient of friction than the object.

4. The positional displacement detector according to claim 3, further comprising a fixation member configured to fix the contact member interposed between the fixation member and a member to be fixed,
wherein the vibration detector is configured with a strain detection sensor provided on the fixation member.

5. The positional displacement detector according to claim 4, wherein the strain detection sensor is a strain gauge.

6. The positional displacement detector according to claim 5, further comprising a processor configured to receive a voltage differential value yielded by differentiation of a voltage value obtained from the strain gauge,
wherein the processor determines that the positional displacement has occurred when a condition A and a condition B are both satisfied, the condition A being that an absolute value of the voltage differential value is equal to or more than a preset threshold, the condition B being that a reversal of a sign of the voltage differential value has been detected in a predetermined duration before the condition A is satisfied.

7. The positional displacement detector according to any one of claims 1 to 3,
wherein the contact member and the prohibition member each have electrical conductivity, and
a contact configured with the contact member and the prohibition member is included in place of the vibration detector.

8. A robot hand, comprising:
gripping claws configured to grip an object;
a contact member configured to make contact with the object gripped by the gripping claws and deform with a positional displacement of the object;
a prohibition member configured to make contact with the deformed contact member to prohibit a deformation of a magnitude equal to or more than a predetermined magnitude from being caused to the contact member; and
a vibration detector configured to detect a vibration generated when the contact member has made contact with the prohibition member.

9. The robot hand according to claim 8,
wherein the contact member includes a fixation portion and a contact portion,
the fixation portion extending in a first direction and being fixed to the gripping claws,
the contact portion extending from the fixation portion in a second direction intersecting the first direction, the contact portion being configured to make contact with the object.

10. The robot hand according to claim 9, wherein the prohibition member has a hole or a notch through which the contact portion of the contact member passes.

11. The robot hand according to claim 10, further comprising a fixation member configured to fix the fixation portion of the contact member, the fixation portion being interposed between the fixation member and the gripping claws,
wherein the fixation member has a groove in which the fixation portion fits, the groove extending in the first direction.

12. The robot hand according to claim 11, wherein the vibration detector is configured with a strain detection sensor provided on the fixation member.

13. The robot hand according to any one of claims 8 to 11, wherein the contact member and the prohibition member each have electrical conductivity, and
a contact configured with the contact member and the prohibition member is included in place of the vibration detector.

14. A robot system, comprising a robot hand and a processor,
the robot hand including:
gripping claws configured to grip an object;
a contact member configured to make contact with the object gripped by the gripping claws and deform with a positional displacement of the object;
a prohibition member configured to make contact with the deformed contact member to prohibit a deformation of a magnitude equal to or more than a predetermined magnitude from being caused to the contact member; and
a vibration detector configured to detect a vibration generated when the contact member has made contact with the prohibition member,
the processor being configured to determine that the gripping of the object by the gripping claws has failed when a signal based on the vibration detected by the vibration detector does not become equal to or more than a predetermined magnitude before a predetermined time elapses after a command to close the gripping claws is output.

15. The robot system according to claim 14, wherein the vibration detector is configured with a strain detection sensor, the strain detection sensor being configured to output a signal based on a strain caused by the vibration, and
the processor is configured to receive a voltage differential value yielded by differentiation of a voltage value obtained from the signal output by the strain detection sensor, the processor being configured to determine that the positional displacement has occurred when a condition A and condition B are both satisfied, the condition A being that an absolute value of the voltage differential value is equal to or more than a preset threshold, the condition B being that a sign of the voltage differential value has been reversed in a predetermined duration before the condition A is satisfied.
